# EUROPEAN PATENT SPECIFICATION

(11) **EP 1 356 620 B1**
(45) Date of publication and mention of the grant of the patent: **17.11.2004**
(21) Application number: 02715516.7
(22) Date of filing: 18.01.2002
(51) Int. Cl.: H04J 14/02

(54) **WDM OPTICAL COMMUNICATIONS SYSTEM**
OPTISCHES WDM-KOMMUNIKATIONSSYSTEM
SYSTEME DE COMMUNICATION OPTIQUE A MRL

(30) Priority: 20.01.2001 GB 0101521
(43) Date of publication of application: 29.10.2003
(73) Proprietor: Marconi UK Intellectual Property Ltd, Coventry, CV3 1HJ (GB)
(72) Inventor: GOODFELLOW, Robert, Charles, Brackley Northants NN13 6PA (GB)
(74) Representative: Cardus, Alan Peter
(86) International application number: PCT/GB2002/000207
(87) International publication number: WO 2002/058302

(56) References cited:
- EP-A- 0 759 681
- EP-A- 0 924 950
- EP-A- 0 926 853
- TACHIKAWA Y ET AL: "Lightwave transrouter based on arrayed-waveguide grating multiplexer" ELECTRONICS LETTERS, IEE STEVENAGE, GB, vol. 30, no. 18, 1 September 1994 (1994-09-01), pages 1504-1506, XP006001005 ISSN: 0013-5194

## Description

The present invention relates to the field of optical communications systems.

Wavelength division multiplex (WDM) line and ring systems are becoming preferred solutions for carrying high communications traffic volumes. Signals are carried as modulation on optical carriers, each carrier occupying a distinct part of the spectrum. These systems require the generation of an optical carrier at a selected wavelength at each location where this wavelength is required to be transmitted. The cost of the transmitter cards where such generation is performed is a major contribution to the total cost of the network.

There is a need for flexibility so that any input signal can be carried on any wavelength, and the wavelength of the carrier can be changed without the need for moving any physical boards or plugs. Hence there is a need for a switch arrangement for the optical signals to allow each input signal to be allocated to a selected carrier. It is preferable to carry the signals as modulated carriers on shared optical guides (i.e. including optical fibre and optical waveguides). Hence, in combination with the switch arrangement, there is a need in some applications for optically multiplexing a plurality of the signals onto a single transmission fibre.

Fixed wavelength transmitters are known and multiplexing onto the transmission fibre may be achieved conventionally by using a passive arrangement of diffraction gratings, interference filters or optical integrated waveguides (e.g. M.K.Smit: "New focusing and dispersive planar component based on an optical phased array", Electronics Letters, vol. 24, no. 7, pp.385-386, Mar, 1988; and A.R. Vellekoop and M.K. Smit: "Four-Channel integrated-optic wavelength demuliplexer with weak polarisation dependence", Journal of Lightwave Technology, vol.9, no 3, pp.310-314, MAR.1991, and C Dragone: "An N x N optical multiplexer using a planar arrangement of two star couplers", Photonics Technology Letter, vol.3, no 9, pp.812-815, Sept. 1991). Flexibility of connection may be accomplished by changing the electrical routing into the optical transmitters by means of a patch panel or an electrical space switch. However, this electrical switching becomes problematic for high time division multiplex (TDM) rates such as 10Gbits/s and above and where switch reconfigurability is called for in remote locations.

An alternative arrangement is to use tuneable wavelength transmitters with outputs modulated by input electrical signals and to achieve the flexibility by means of the actively routed optical multiplexer (or active WDM combiner) as described in British patent application GB 9826108.4 assigned to Marconi Communications (see in particular Figures 3 to 6 and the corresponding parts of the description). Currently such active WDM combiners are not commercially available and the only practical way to achieve such flexibility today is to use a passive splitter/combiner, eg a fixed fibre combiner or waveguide combiner. However, such splitter/combiners are limited so that they will only couple (for a perfect coupler) 1/nth of the input power, where n is the number of paths combined or split. With 32 to 100 channels of WDM now commonplace the losses experienced with such an arrangement are significant - typically requiring compensation by use of optical amplifiers.

For high speed optical communications, better optical signal quality can be achieved with an unmodulated (i.e. not tunable) laser that has a pure spectrum operated in combination with a separate optical modulator with outputs modulated by input electrical signals, e.g. a DFB diode laser and an Electro-Absorption Modulator or Mach- Zehnder Lithium Niobate Modulator.

There is a need to be able to take any input signal and transmit it on any carrier wavelength.

The present invention provides an Optical Communications System comprising one or more light sources each for producing light in a different part of the spectrum; a plurality of optical modulators each for modulating with an input signal the light produced by the one or more light sources; an optical switch connected between the one or more light sources and the plurality of optical modulators for switching the light output from the or each of the light sources to a different selected one of the plurality of optical modulators; in which the optical switch is connected between the one or more light sources and the plurality of optical modulators for passing to a selected one of the plurality of optical modulators via a selected path in a first direction the light output by the or one of the light sources and for passing via the selected path in the opposite direction the modulated light output from the selected one of the plurality of optical modulators.

Embodiments of the present invention will now be described by way of example with reference to the drawings in which:
Figures 1 to 4 show optical communications systems of the prior art;
Figures 5 to 8 show optical communications system according to embodiments of the present invention;
Figure 9 shows an aspect of the optical communications system of Figure 8 in more detail.

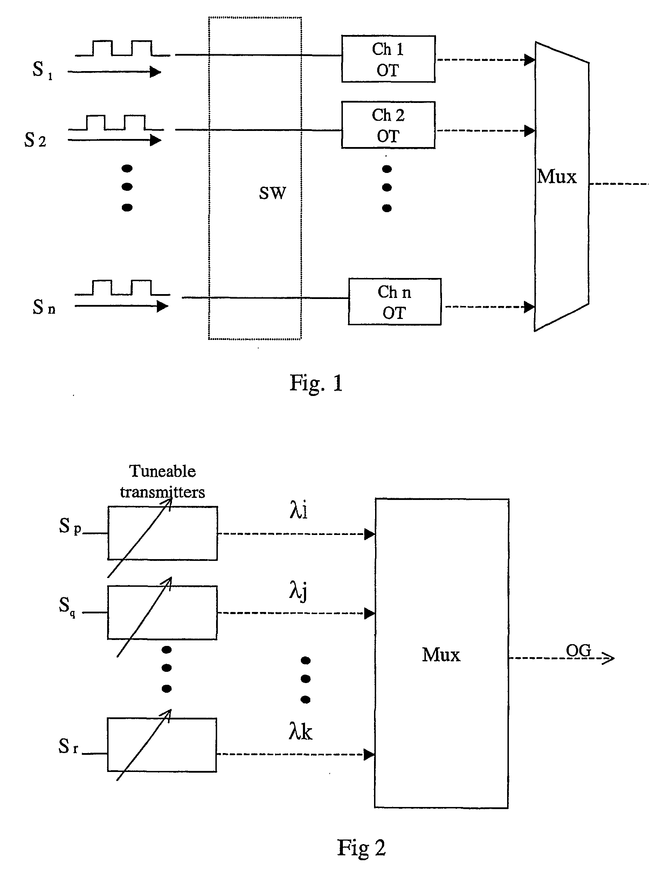

Figure 1 shows fixed wavelength optical transmitters OT in combination with a conventional optical multiplexer Mux for multiplexing the signals onto a transmission fibre OG. Flexibility is achieved by an electrical switch or patch panel SW allowing the routing of the electrical signals S₁, S₂... Sₙ into the optical transmitters to be varied.

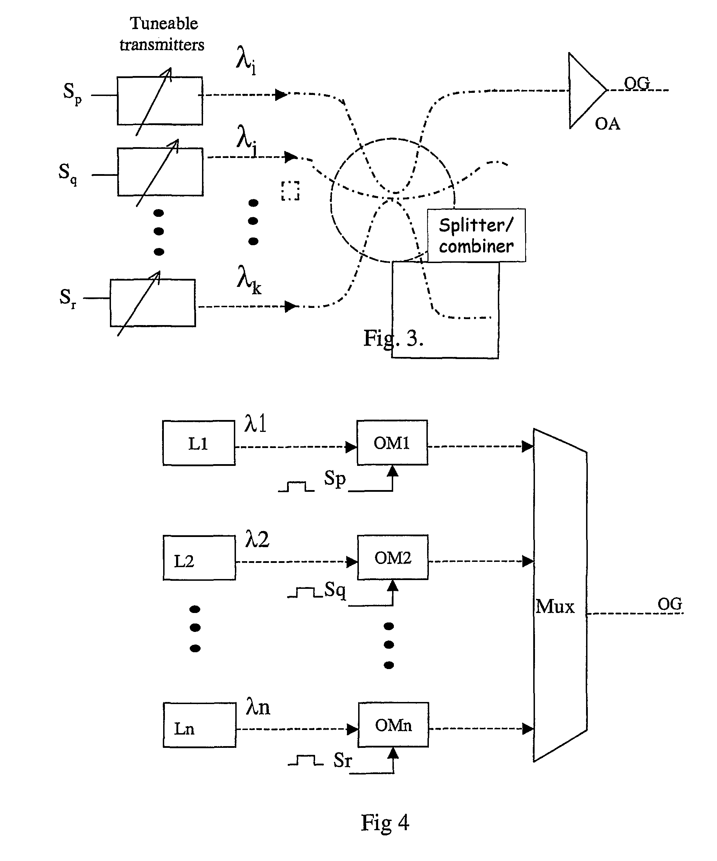

Figure 2 shows an alternative arrangement using tuneable wavelength transmitters with outputs modulated by input electrical signals Sₚ, S_{q}...Sᵣ with the flexibility of a actively routed optical multiplexer (or active WDM combiner Mux). Figure 3 shows the use of a passive splitter/combiner, eg a fixed fibre combiner or waveguide combiner in place of the actively routed optical multiplexer of Figure 2 in combination with an optical amplifier OA..

Figure 4 shows unmodulated lasers L1, L2...Ln that each produce a spectrally pure output λ₁, λ₂,...λₙ to a fixed one of an array of optical modulators OM₁, OM₂...OMₙ whose outputs are modulated by input electrical signals Sₚ, S_{q}...Sᵣ. The outputs of the optical modulators are taken to optical multiplexer Mux.

### Two switch Solution

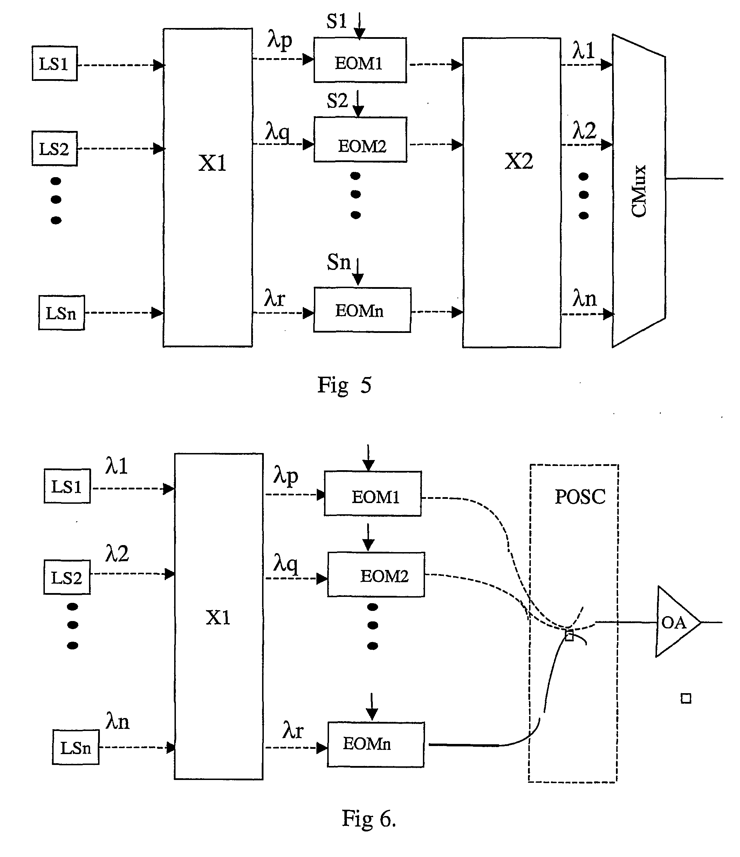

As shown by way of example in Figure 5, the invention provides a way to avoid electrical switching of the input signals. An array of light sources LS₁,LS₂...LSₙ each providing a different carrier wavelength λ₁, λ₂,... λₙ are each connected to a different input of a first optical nxn switch X1 (i.e. having n input and n output ports). Each output of the switch X1 is connected to a different one of an array of electro-optical modulators EOM₁, EOM₂...EOMₙ (such as electro absorption, Mach-Zehnder interferometric waveguide type or electromechanical). Each electro-optical modulator EOM receives an electrical input carrying a signal, i.e. S₁, S₂ ...Sₙ and imposes the signal onto the optical carrier (i.e. one of λₚ, λ_{q} ...... λᵣ) received from first optical switch X1. Hence the traffic carried in each input signal can be routed onto a desired wavelength carrier by operation of first optical switch X1, i.e. by switching of optical, not electrical, signals. The modulated optical output from each electro-optic modulator EOM is connected to a different one of a plurality of inputs of the second nxn optical switch X2. Each output of the second optical switch X2 is connected to a different input of optical multiplexer Cmux. Optical multiplexer Cmux has frequency sensitive inputs requiring the correct frequency to be applied to each input for correction operation. Second optical switch X2 allows the optical signals output from electro-optical modulators EOM to be routed so that each input to optical multiplexer Cmux receives the correct frequency carrier. The single output of optical multiplexer Cmux is connected to a single optical guide OG. Optical multiplexer Cmux provides that each of the wavelengths can be combined into a single fibre. As an alternative to optical multiplexer Cmux, an optical combiner (not shown) may be used.

Alternatively, as in Figure 6, the second switch can be replaced by a passive optical splitter/combiner POSC which combines all optical signals at its inputs. The passive optical splitter/combiner does not have frequency sensitive inputs, hence second optical switch X2 is not needed. As indicated above, the loss introduced by optical splitter/combiner POSC may be overcome by using optical amplifier OA, connected at the POSC output.

### Single Switch Solution

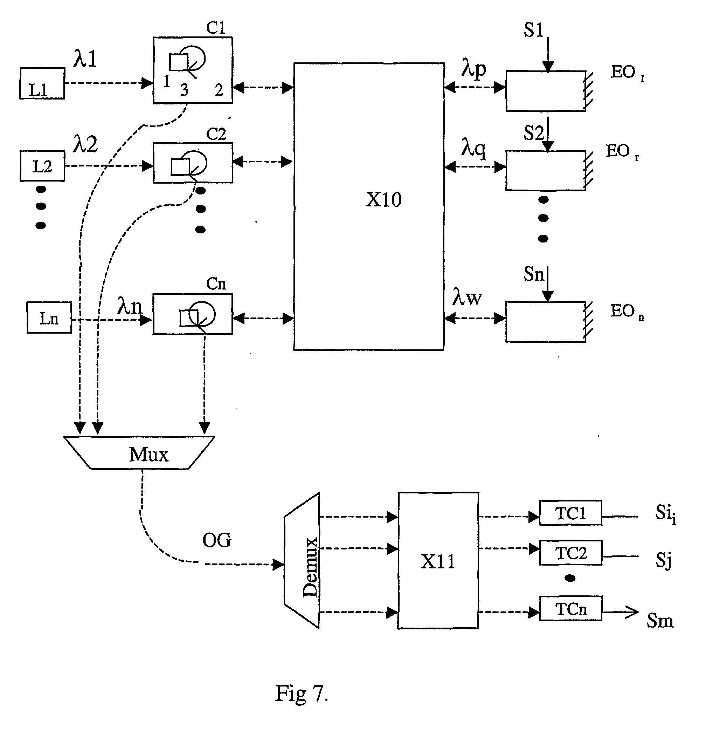

A further preferred embodiment, in which the optical switch and optical modulator are used in a reflective manner, is shown in Figure 7. As shown in Figure 7, light is generated in plurality of lasers L₁, L₂...Lₙ. The output (λ₁, λ₂...λn) from each laser is coupled into a different one of plurality of optical circulators C₁, C₂...Cₙ. An optical circulator transmits light from one port to the next port in sequence but has very high attenuation (e.g.>40dB) in the reverse port sequence. Hence, in Figure 7, light entering the first port 1 of optical circulators C₁, C₂...Cₙ is coupled to the second port 2 of that circulator with low loss, light entering the second port is coupled to the third port 3 with low loss and light entering the third port is coupled with the first port with low loss. Each one of optical circulators C₁, C₂...Cₙ transmits the light received from the respective laser to a different input of nxn optical switch X10.

Each output of optical switch X10 is connected to a different one of a plurality of reflective optical modulators EO₁, EO₂...EOₙ (i.e. modulators that reflect the modulated carrier). Optical switch X10 allows light received at any wavelength to be routed to any one of the optical reflector modulators EO₁, EO₂...EOₙ. Each one of optical reflector modulators EO₁, EO₂...EOₙ receives an electrical input S₁, S₂ ...Sₙ carrying a signal and imposes the signal onto the optical carrier received from optical switch X10. Hence the traffic carried in each signal can be transferred onto a desired wavelength carrier by operation of optical switch X10.

As modulators EO₁, EO₂...EOₙ are reflective, the modulated carrier is output at the same port as that used to receive the unmodulated carrier from optical switch X10 and is coupled back into optical switch X10 at the same port as that used to output the unmodulated carrier. Optical switch X10 is bi-directional and the modulated carrier follows the same route through the switch as the corresponding unmodulated carrier, but in the opposite direction and is thus routed back in the direction of the source (L₁, L₂...Lₙ) that generated the carrier on that wavelength.

On exiting optical switch X10, the modulated carrier enters the optical circulator of plurality C₁, C₂...Cₙ that passed the corresponding unmodulated carrier at the second port 2 thereof. The optical circulator routes the modulated carrier to a third port 3 thereof connected to an input to optical multiplexer Mux. As before, the optical multiplexer has frequency sensitive inputs requiring the correct frequency to be applied to each input. The reflective arrangement described above, ensures that the modulated carriers are routed so that each input to optical multiplexer Mux receives the correct frequency carrier. The single output of optical multiplexer Mux is connected to a single optical guide OG for transmitting the combined optical carriers therethrough. Optical multiplexer Mux provides that each of the wavelengths can be combined into a single transmission fibre.

At the receive end of the optical guide OG the different carrier frequencies are split in optical demultiplexer Demux, each output of which is connected to a different input of nxn optical switch X11. Each output of optical switch X11 is connected to a different one of tributary cards TC₁, TC₂...TCₙ such that the signal on each carrier received from optical guide OG may be flexibly routed to any tributary card. Each tributary card TC₁, TC₂...TCₙ typically contains a photo-detector for conversion of the optically modulated signal into the electrical domain. The reflective routing arrangement of the transmitter is not necessary in the receiver as photo-detectors are available which can efficiently detect signals across a spectral band greater than 100nm, i.e. sufficient to cover the bandwidth of a typical WDM system.

Lasers L₁, L₂...Lₙ could comprise a semiconductor diode laser having an inbuilt frequency stabilising grating such as a distributed feedback (DFB) diode laser. Alternative types of laser include semiconductor diode distributed Bragg reflector (DBR) laser, a fibre Bragg laser or distributed feedback fibre laser constructed using erbium doped fibre and pumped using a diode laser. Such lasers may be constructed in an array format to give regular spacing of the output ports which may make optical alignment more practical.

The optical circulators C₁, C₂...Cₙ may be of a type using a calcite beam splitter. As an alternative to the optical circulators a polarisation beam splitter (PBS) arrangement may be used in combination with an arrangement for rotating the polarisation of the light between leaving the PBS for the modulator and returning to the PBS, such as a suitable Faraday rotator crystal and magnet. The polarised light passes through the PBS into port 1 and then it exits port 2 into the modulator then the plane of polarisation is changed by 90 degrees before it is put into the PBS again at port 2 to be reflected back our of port 3 to the multiplexer. Lasers commonly produce polarised radiation and so a PBS or a circulator of a type capable of handling just one polarisation may be sufficient. This makes construction less complex compared to a polarisation diverse optical circulator and facilitates use of an integrated multiport circulator.

The optical switches X1, X2, X10, X11 may be based on a thermally switched waveguide type, a type based upon the evaporation of a liquid at each crosspoint, on movement of a liquid at the crosspoint, or on mechanical movement of a miniature mirror or diaphragm.

The optical modulators EOM₁, EOM₂...EOMₙ, EO₁, EO₂...EOₙ may be an electro absorption waveguide or reflecting Fabry-Perot type semiconductor diode, electro optic interferometric (such as Mach Zehnder) type, or a modulated semiconductor optical amplifier, or a micro mechanical reflective fast switch.. The Electro absorption modulators are based on reverse-biasing of a semiconductor diode to vary the loss and could be used in a reflective arrangement. Alternatively, the modulatable semiconductor optical amplifier could be used in a reflective mode.

Alternatively, the above modulators may comprise an electrostatically actuated diaphragm reflector implemented in a silicon fabrication.

The optical multiplexing may be achieved by means of a dielectric mirror combination, a diffraction grating spectrometer and array waveguide (AWG) spectrometer arrangements.

### Single switch with a transmissive modulator

The absorption edge semiconductor (reflective) modulator has been demonstrated in the literature to be capable of high speed modulation to beyond 40Gbit/s. However, with such modulators the best operation is obtained for a range of wavelengths close to the band edge of the semiconductor used in the core of the waveguide. This is the range of wavelengths where the refractive index changes sufficiently greatly with bias for efficient modulation and sufficiently slowly with bias to provide low chirp in wavelength under modulation. In the arrangement of Fig. 7 any wavelength carrier can be delivered to any modulator, so the deviations from the above optimum condition may affect performance.

According to a further preferred embodiment, transmissive modulators (i.e. modulators that transmit the modulated carrier), such as Mach-Zehnder modulators are used. Advantageously, Mach-Zehnder modulators are effective over a wide range of carrier wavelengths. A Mach-Zehnder modulator may be used in reflective mode in the arrangement of Figure 7. For very high bit rates a travelling wave Mach-Zehnder modulator device is very effective for modulation of transmitted light in a two optical port arrangement but is less effective in a reflective arrangement.

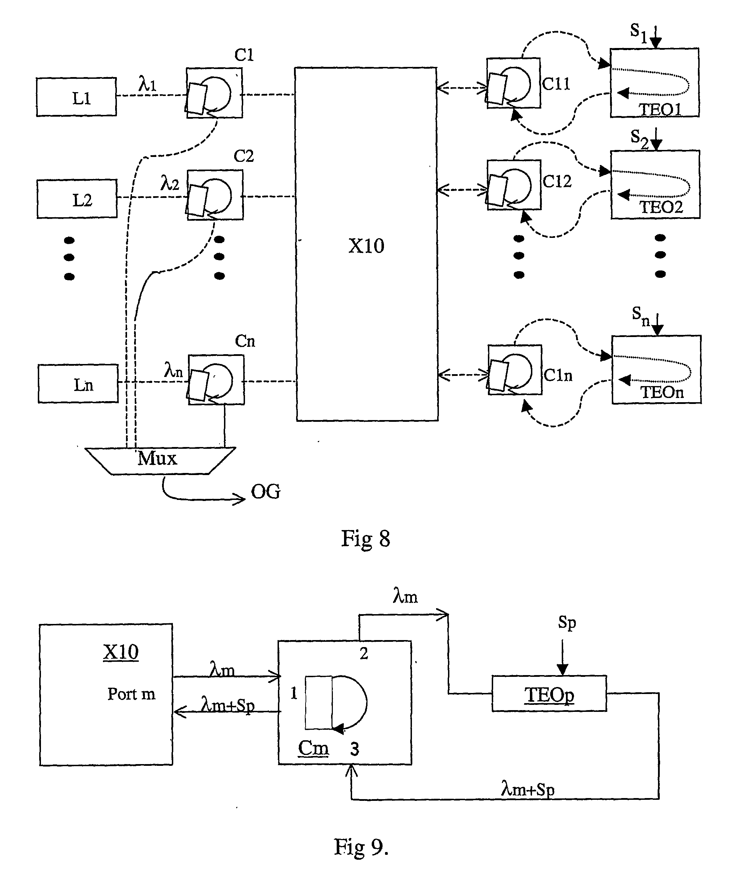

Figure 8 shows an arrangement according to a further preferred embodiment using transmissive "two-optical port" modulators such as travelling wave Mach-Zehnder modulators, optical amplifiers and also electro absorption semiconductor types. The arrangement here is similar to that of Figure 7. Elements common to both figures have been given the same references and will not be described further here.

Instead of being connected directly to the optical modulators, as in Figure 7, the outputs of optical switch X10 each connect to a different one of plurality of optical circulators C₁₁, C₁₂...C₁ₙ. Each one of optical circulators C₁₁, C₁₂...C₁ₙ transmits the light received from the respective output port of switch X10 to a different one of transmissive modulators TEO₁, TEO₂...TEOₙ. Each transmissive modulator TEO₁, TEO₂...TEOₙ outputs the received carrier modulated with the signal received on the respective electrical input S₁, S₂ ...Sₙ to a third port on the respective optical circulator. Each optical circulator C₁₁, C₂₂...Cₙ passes the modulated carrier received at the third input thereof for output at the first port thereof, i.e. the port at which it received the unmodulated carrier from optical switch X10. Hence the modulated carrier is coupled back (as in the arrangement of Figure 7) into optical switch X10 at the same port as that used to output the unmodulated carrier. Transmission of the modulated carriers to the optical guide OG is achieved in a similar way to that described above, with reference to Figure 7.

Again, if a single-polarisation light source is used, the circulators can be of a single-polarisation type which is less complex than the polarisation-diverse optical circulator.

### Hybrid Integration

In Figures 5 to 8 the component count is quite large. However, many of these components have a similar function, advantageously creating the possibility of integration. Semiconductor laser arrays may be used in place of discrete lasers. These may be DFB diode laser arrays, or a semiconductor amplifier array could be used with a diffraction grating arrangement to produce a WDM array source. An array of semiconductor optical amplifiers (SOAs) may be assembled together with a silica or silicon waveguide arrangement in such a way as to achieve an array of external cavity laser sources. The wavelength selective reflectors can be integrated by imposing Bragg reflective gratings into the waveguide as refractive index variations by means of etching or compositional diffusion induced by UV irradiation as are now well known technologies. An array of fibre DFB lasers may be used - the lasers aligned using a silicon V groove optical bench arrangement.

A plurality of circulators may also be integrated into a single multi-channel optical device as described in co-pending application GB 98 26 108 in the name of Marconi Communications. If fibre lasers are placed 250 microns apart, a 32 channel circulator could be produced less than 1cm wide. An array of optical modulators with 250 micron to 1000 micron spacings is quite practical.

The configuration of Figures 7 or 8 may be implemented as a hybrid integrated device or alternatively as a compact system interconnected by means of optical fibres and collimating lenses and or free space optical beams.

Figure 9 illustrates the operation of the optical circulator C₁ₚ connected between output port p of optical switch X10 and optical transmissive modulator TEOₚ. Unmodulated carrier λₘ is output from port p of switch X10 and passes through circulator C₁ₚ from ports 1 to 2 then on to modulator TEOₚ where it is modulated with the signal Sₚ from the electrical input to form modulated carrier (λₘ+Sₚ). Modulated carrier (λₘ+Sₚ) is output from modulator TEOₚ and passes back through the circulator C₁ₚ from ports 3 to 1 thereof and back to port p of switch X10.

Advantageously amplifiers may be placed between the light sources and the modulators, preferably after the switch as the losses in the switch could be significant. The amplifiers could be SOAs or fibre or slab waveguide types.

## Claims

1. An Optical Communications System comprising one or more light sources each for producing light in a different part of the spectrum;
a plurality of optical modulators each for modulating with an input signal the light produced by the one or more light sources;
an optical switch connected between the one or more light sources and the plurality of optical modulators for switching the light output from the or each of the light sources to a different selected one of the plurality of optical modulators;
in which the optical switch is connected between the one or more light sources and the plurality of optical modulators for passing to a selected one of the plurality of optical modulators via a selected path in a first direction the light output by the or one of the light sources and for passing via the selected path in the opposite direction the modulated light output from the selected one of the plurality of optical modulators.

2. The optical communications system as claimed in Claim 1 also comprising one or more optical routing means in which the or each light source is connected to the optical switch via the one or more optical routing means.

3. The optical communications system as claimed in Claim 2 also comprising an optical multiplexer comprising a plurality of inputs;
in which the modulated light output from each of the selected one or ones of the plurality of optical modulators is connected to a different one of the plurality of optical multiplexer inputs via the optical switch and the at least one optical routing means.

4. The optical communications system as claimed in any above Claim in which the optical modulators are reflective.

5. The optical communications system as claimed in Claim 2 or 3 in which the optical modulators are transmissive;
in which the system also comprises one or more second optical routing means in which each optical routing means of the second plurality comprises a first port for receiving light from the or one of the light sources via the optical switch;
in which the or each optical routing means also comprises a second port for passing the light received at the first port to a different one of the optical modulators and a third port for receiving modulated light from the respective one of the optical modulators, for passing to the first port for output.

6. The optical communications system as claimed in any one of claims 2 to 5 in which at least one of the optical routing means and the second optical routing means comprise one or more optical circulators.

7. The optical communications system as claimed in any one of claims 2 to 5 in which at least one of the optical routing means and the second optical routing means comprise one or more polansation beam splitters.

## Patentansprüche

1. Optisches Kommunikationssystem, umfassend:
eine oder mehrere Lichtquellen, jeweils zum Erzeugen von Licht in einem unterschiedlichen Teil des Spektrums;
mehrere optische Modulatoren, jeweils zum Modulieren des durch die eine oder die mehreren Lichtquellen erzeugten Lichts mit einem Eingangssignal;
einen optischen Schalter, der zwischen die eine oder die mehreren Lichtquellen und die mehreren optischen Modulatoren geschaltet ist, um das von der oder jeder Lichtquelle ausgegebene Licht zu einem unterschiedlichen ausgewählten der mehreren optischen Modulatoren zu schalten,
wobei der optische Schalter zwischen die eine oder die mehreren Lichtquellen und die mehreren optischen Modulatoren geschaltet ist, um das von der oder einer der Lichtquellen ausgegebene Licht über einen ausgewählten Weg in einer ersten Richtung zu einem ausgewählten der mehreren optischen Modulatoren durchzulassen und um das von dem einen ausgewählten der mehreren optischen Modulatoren ausgegebene modulierte Licht über den ausgewählten Weg in der entgegengesetzten Richtung durchzulassen.

2. Optisches Kommunikatiönssystem nach Anspruch 1,
das außerdem eine oder mehrere optische Wegelenkungseinrichtungen umfasst, wobei die oder jede Lichtquelle über die eine oder die mehreren optischen Wegelenkungseinrichtungen mit dem optischen Schalter verbunden ist.

3. Optisches Kommunikationssystem nach Anspruch 2,
das außerdem einen optischen Multiplexer umfasst, der mehrere Eingänge aufweist,
wobei das von jeweils dem oder den ausgewählten einen der mehreren optischen Modulatoren ausgegebene modulierte Licht über den optischen Schalter und die mindestens eine optische Wegelenkungseinriehtung mit einem unterschiedlichen der mehreren Eingänge des optischen Multiplexers verbunden ist.

4. Optisches Kommunikationssystem nach einem der vorhergehenden Ansprüche,
bei welchem die optischen Modulatoren reflektiv sind.

5. Optisches Kommunikationssystem nach Anspruch 2 oder 3,
bei welchem die optischen Modulatoren transmissiv sind,
wobei das System außerdem eine oder mehrere zweite optische Wegelenkungseinrichtungen umfasst, wobei jede optische Wegelenkungseinrichtung der zweiten Mehrzahl einen ersten Port zum Empfangen von Licht von der oder einer der Lichtquellen über den optischen Schalter aufweist,
wobei die oder jede optische Wegelenkungseinrichtung außerdem einen zweiten Port aufweist, um das am ersten Port empfangene Licht zu einem unterschiedlichen der optischen Modulatoren weiterzuleiten, sowie einen dritten Port, um von dem jeweiligen einen der optischen Modulatoren moduliertes Licht zu empfangen, und zwar zur Weiterleitung zu dem ersten Port zur Ausgabe.

6. Optisches Kommunikationssystem nach einem der Ansprüche 2 bis 5,
bei welchem mindestens die optischen Wegelenkungseinrichtungen oder die zweiten optischen Wegelenkungseinrichtungen einen oder mehrere optische Zirkulatoren umfassen.

7. Optisches Kommunikationssystem nach einem der Ansprüche 2 bis 5,
bei welchem mindestens die optischen Wegelenkungseinrichtungen oder die zweiten optischen Wegelenkungseinrichtungen einen oder mehrere Polarisationsstrahlteiler umfassen.

## Revendications

1. Système de communication optique comprenant une ou plusieurs sources de lumière, chacune destinée à produire de la lumière dans une partie différente du spectre ;
une pluralité de modulateurs optiques destinés chacun à moduler avec un signal d'entrée la lumière produite par la seule source de lumière ou plusieurs sources de lumière ;
un commutateur optique connecté entre la seule source de lumière ou plusieurs sources de lumière et la pluralité de modulateurs optiques afin de commuter la sortie de lumière provenant de la source de lumière ou de chaque source de lumière vers un modulateur différent sélectionné parmi la pluralité de modulateurs optiques ;
dans lequel le commutateur optique est connecté entre la seule source de lumière ou plusieurs sources de lumière et la pluralité de modulateurs optiques afin de passer à un modulateur sélectionné parmi la pluralité de modulateurs optiques via un chemin sélectionné dans une première direction la lumière sortie par la seule source de lumière ou l'une des sources de lumière et afin de passer via le chemin sélectionné dans la direction opposée la lumière modulée sortie du modulateur sélectionné parmi la pluralité de modulateurs optiques.

2. Système de communication optique selon la revendication 1 comprenant également un ou plusieurs moyens de routage optique dans lequel la source de lumière ou chaque source de lumière est connectée au commutateur optique via le seul moyen de routage optique ou plusieurs moyens de routage optique.

3. Système de communication optique selon la revendication 2 comprenant également un multiplexeur optique comprenant une pluralité d'entrées ;
dans lequel la lumière modulée, sortie du modulateur sélectionné ou de chaque modulateur sélectionné de la pluralité de modulateurs optiques, est connectée à une entrée différente de la pluralité d'entrées du multiplexeur optique via le commutateur optique et le au moins un moyen de routage optique.

4. Système de communication optique selon l'une quelconque des revendications précédentes dans lequel les modulateurs optiques sont réfléchissants.

5. Système de communication optique selon la revendication 2 ou 3 dans lequel les modulateurs optiques sont transmissifs ;
dans lequel le système comprend également un ou plusieurs deuxièmes moyens de routage optique dans lesquels chacun des moyens de routage optique de la deuxième pluralité comprend un premier port destiné à recevoir la lumière provenant de la seule source de lumière ou d'une des sources de lumière via le commutateur optique ;
dans lequel le moyen de routage optique ou chacun des moyens de routage optique comprend également un deuxième port destiné à passer la lumière reçue sur le premier port à un modulateur différent parmi les modulateurs optiques et un troisième port destiné à recevoir la lumière modulée du modulateur optique respectif parmi les modulateurs optiques, afin de la passer au premier port à des fins de sortie.

6. Système de communication optique selon l'une quelconque des revendications 2 à 5 dans lequel au moins un des moyens de routage optiques et les deuxièmes moyens de routage optiques comprennent un ou plusieurs circulateurs optiques.

7. Système de communications optique 7 selon l'une quelconque des revendications 2 à 5 dans lequel au moins un des moyens de routage optiques et les deuxièmes moyens de routage optiques comprennent un ou plusieurs séparateurs de faisceau de polarisation.
